(19) Europäisches Patentamt
European Patent Office
Office européen des brevets

(11) Publication number : **0 225 801 B2**

(12) **NEW EUROPEAN PATENT SPECIFICATION**

(45) Date of publication of the new patent specification : **26.10.94 Bulletin 94/43**

(51) Int. Cl.$^5$ : **G02B 1/04,** C08L 71/12, C08L 25/00

(21) Application number : **86309543.6**

(22) Date of filing : **08.12.86**

(54) **Optical devices.**

(30) Priority : **06.12.85 JP 275593/85**
**08.08.86 JP 187195/86**

(43) Date of publication of application :
**16.06.87 Bulletin 87/25**

(45) Publication of the grant of the patent :
**06.03.91 Bulletin 91/10**

(45) Mention of the opposition decision :
**26.10.94 Bulletin 94/43**

(84) Designated Contracting States :
**DE FR GB NL**

(56) References cited :
**FR-A- 2 313 413**
**US-A- 3 383 435**
**US-A- 4 373 065**
**J. of Applied Physics 50(10), Oct. 1979, p. 6067-6071**
**Polymer 1984, vol. 25, March, p. 318-322**
**Polymer Handbook, 2. Edition 1975**
**Macromolecules 1988, 21, p. 2794-2800**

(73) Proprietor : **SUMITOMO CHEMICAL COMPANY, LIMITED**
**Kitahama 4-chome 5-33**
**Chuo-ku Osaka 541 (JP)**

(72) Inventor : **Imai, Shozaburo**
**8-4, Higashiizumigaoka-1-chome**
**Toyonaka-shi (JP)**
Inventor : **Isobe, Michihisa**
**20-13-1106, Inagehigashi-3-chome**
**Chiba-shi (JP)**
Inventor : **Moritani, Masahiko**
**15-38, Takatsucho**
**Niihama-shi (JP)**
Inventor : **Niwano, Masahiro**
**6, Ikkucho-2-chome**
**Niihama-shi (JP)**
Inventor : **Manabe, Kenji**
**1-34, Takinomiyacho**
**Niihama-shi (JP)**

(74) Representative : **Lamb, John Baxter et al**
**MARKS & CLERK,**
**57-60 Lincoln's Inn Fields**
**London WC2A 3LS (GB)**

**EP 0 225 801 B2**

## Description

The present invention relates to optical devices having low birefringence and which are useful, for example, as optical disk substrates for optically recording and reproducing information and as lenses, prisms, etc.

Recently there has been developed the system of recording and reproducing high-density information, e.g images and/or sounds, by using laser beams, wherein the information is recorded in the form of fine projections or depressions on disk substrates or in the form of changes in optical properties of recording films formed on disk substrates.

Disk substrates for use in the above recording and reproducing systems should be transparent and in addition should have good dimensional stability, high optical homogeneity, and small birefringence.

A plurality of duplicated substrates can be economically produced by using a resin material to form the disk substrate. However, it is widely recognized that the resin flows during moulding of the disk substrate and the molecules are oriented during cooling so that birefringence is induced. This is a fatal defect for an optical disk substrate.

The molecular orientation caused during moulding is inevitable, particularly in injection moulding. From this point of view, a polymer comprising methyl methacrylate is the only resin material of low optical anisotropy for moulding disk substrates.

Known polymers comprising methyl methacrylate, however, have the drawback that, because of their high hygroscopicity, substrates formed thereof have inferior dimensional stability, that is the substrate warps and/or twists in highly humid atmospheres. This drawback is described in detail, for example, in Nikkei Electronics (p. 133, issued June 7, 1982). As a result, aromatic polycarbonate resins of low hygroscopicity are in use as materials for accoustic compact disks.

However, it is difficult to decrease birefringence of the moulded substrates formed of aromatic carbonate resins since the resins contain aromatic rings, which have a large anisotropy, in their backbone chains. Decreasing the molecular weight and the conditions of the moulding are under investigation as means by which birefringence may be reduced. However, since birefringence of the substrate originates from the material itself, it is impossible to consistently produce substrates with small birefringence and it is extremely difficult at present to produce small-birefringent substrates, larger in diameter than acoustic compact disks, by injection moulding.

To improve dimensional stability, which is a drawback of a polymer comprising methyl methacrylate, copolymers comprising methyl methacrylate and aromatic vinyl monomers have been proposed [see, for example, Japanese Laid-Open Patent Applications Nos. 33446/82, 162135/82, and 88843/83]. However, these copolymers containing aromatic rings are not of practical use because of their liability to large birefringence. For the disk substrates which are used not only for reproducing but also for the recording of information, a material is required which has small birefringence and good dimensional stability, but no resin has yet been found out that can adequately satisfy these requirements.

With respect to other optical devices including lenses and prims, for which methacrylic resins and the like have been used as materials, there are needs for optical devices formed from a resin which is of reduced birefringence and superior in heat resistance, mechanical strength, and dimensional stability.

U.S. Patent No. 4,373,065 discloses an optical recording device comprising an optically isotropic composition prepared by mixing two resins which have opposite optical anisotropies but are completely miscible with each other, in such a ratio that their optical anisotropies will compensate each other so as to reduce the overall birefringence to substantially zero. This patent further describes mixtures prepared by using a polyphenylene ether and a polystyrene as component polymers having opposite optical anisotropies and shows that a film prepared from a mixture such that the anisotropies compensate each other does not cause birefringence even when stress is exerted on the film in the solid state. However, this patent does not reveal that an optical device, such as an optical disk substrate, when formed from the above polymer composition by injection moulding, exhibits small birefringence.

We have found that the birefringence of mouldings, such as optical disk substrates, is not always small when these mouldings are formed by injection moulding (which is recently the most common method of forming optical devices), even from a mixture of two polymers which have opposite optical anisotropies in the solid state and are completely miscible with each other and wherein the mixing ratio is such that the optical anisotropies in the solid state just compensate each other. That is, it has been found that optical materials, such as an optical disk substrate having small birefringence, cannot be obtained by injection moulding of any composition or polymer mixture chosen simply by considering the optical anisotropy of each polymer in the solid state.

In recent years, attempts have been made to produce plastic substrates for magnetooptical disks where the erasing and rewriting of information are possible.

Information recorded on such an optical disk of the magneto-optical type is read by focussing a polarized

laser beam through a lens onto the recording medium of the disk and detecting the Kerr effect-induced slight rotation of the polarization plane of the laser beam reflected from the recording medium. Accordingly, it is necessary in this case to use an optical disk substrate which scarcely causes the birefringence for obliquely incident beams as well as for noramlly incident beams. In addition, the optical disk substrate should have high heat resistance since the substrate during information writing is heated by the laser beam.

It is an object of the invention to provide an optical device which has small birefringence for vertical incident beams as well as obliquely incident beams even when formed by injection moulding, compression compound or the like, and has high heat resistance, well-balanced mechanical strengths, and good dimensional stability.

Basically, the optical device of the invention is formed by injection moulding or compression-injection moulding a polymer material comprising (i) from 56 to 30% by weight polymer portions derived mainly from aromatic vinyl monomers, and (ii) from 44 to 70% by weight of polyphenylene ether polymer portions the average molecular weight of the polyphenylene ether portions being from 0.3 to 0.45, expressed in terms of the intrinsic visosity as measured in chloroform at 25°C. The optical devices of the invention may take the form, for example, of magnetooptical disk substrates, lenses and prisms, besides common optical disk substrates.

The polymeric material of the optical device may be a mixture of a polymer derived mainly from aromatic vinyl monomers and a polyphenylene ether ; a block or graft copolymer comprising both vinyl aromatic monomer-based blocks and polyphenylene ether blocks ; or a mixture of them.

The polymer derived from aromatic vinyl monomers (a polymer constituted mainly of aromatic vinyl monomer units) may be a vinyl aromatic homopolymer or a copolymer comprising at least 50% by weight of aromatic vinyl monomer units. Examples of aromatic vinyl monomers include styrene, α-methylstyrene, m-methylstyrene, p-methylstyrene, o-chlorostyrene, m-chlorostyrene, p-chlorostyrene, m-bromostyrene and p-bromostyrene. In particular, styrene is favourably used.

Suitable monomers for copolymerization with such aromatic vinyl monomers include ; unsaturated nitriles, e.g. acrylonitrile and methacrylonitrile ; alkyl methacrylates, e.g. methyl methacrylate, n-propyl methacrylate, isopropyl methacrylate, n-butyl methacrylate and cydohexyl methacrylate ; alkyl acrylates, e.g. methyl acrylate, ethyl acrylate, propyl acrylate, and butyl acrylate ; and, further, methacrylic acid, acrylic acid, maleic anhydride, citraconic anhydride, N-methylmaleimide, and N-phenylmaleimide. These comonomers may be used alone or in admixture, the type and proportion of the monomers used being suitably chosen within the range thereof where none of them impair the transparency of the resulting polymer composition comprises the aromatic vinyl copolymer and the polyphenylene ether. The amount of aromatic vinyl monomer in the monomer mixture to form the copolymer should be at least 50% by weight, otherwise the resulting resin will have an undesirably high hygroscopicity.

The melt fluidity of the aromatic vinyl polymer expressed in forms of melt flow rate (MFR) at 230°C under 3.8 kg load, is desirably from 0.5 to 200, preferably from 2 to 100. If the MFR exceeds 200, the polymer is poor in mechanical strength and when the MFR is less than 0.5, the birefringence is difficult to reduce.

The aromatic vinyl polymer may be produced by a bulk, suspension, emulsion, or solution polymerization method using a radical initiator, but bulk polymerization and suspension polymerization are preferred in view of the productivity and reduced contamination of the polymer. Sutiable radical initiators include peroxides, e.g. lauroyl peroxide, benzoyl peroxide, di-tert-butyl peroxide, and dicumyl peroxide ; and azo compounds, e.g. 2,2'-azobisisobutyronitrile and 1,1'-azobis(1-cyclohexanecarbonitrile). If necessary, to control the molecular weight, a chain transfer agent may be added, such as tert-butyl, n-butyl, n-octyl, n-dodecyl, or tert-dodecyl mercaptan. The polymerization is generally carried at a temperature of from 50 to 150°C.

The polyphenylene ether may be represented as a polymer consisting of recurring units of the formula:

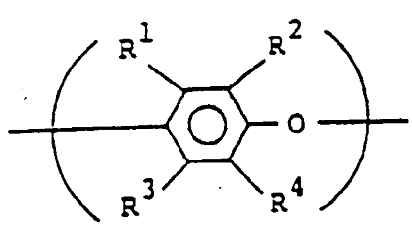

in which $R^1$, $R^2$, $R^3$ and $R^4$ are the same or are different and each is a hydrogen or halogen atom or a hydrocarbyl group.

Polyphenylene ethers, as defined above, are readily prepared by known methods (see. e.g. Japanese Patent Publications Nos. 18692/61 and 36518/72), that is by oxidative coupling of phenolic nomomers in the presence of a copper or manganese catalyst.

Examples of suitable polyphenylene ethers include poly(2,6-dimethyl-1,4-phenylene) ether, poly(2-methyl-6-ethyl-1,4-phenylene) ether, poly(2-methyl-6-propyl-1,4-phenylene) ether, poly(2,6-dipropyl-1,4-phenylene) ether, and poly(2-methyl-6-bromo-1,4-phenylene) ether. In particular, poly(2,6-dimethyl-1,4-phenylene) ether is preferred.

Polyphenylene ether resins generally in use as engineering plastics may be acceptable but resins of lower molecular weights are preferred. That is, when the average molecular weight of the polyphenylene ether is expressed in terms of the intrinsic viscosity of the polymer in chloroform at 25°C, the value is from 0.3 to 0.45, and preferably from 0.35 to 0.42. If the value is less than 0.3, the resulting optical device will have poor mechanical strength.

To decrease the birefringence, particularly for obliquely incident beams, the intrinsic viscosity of the polyphenylene ether is up to 0.45.

This is conceivable because the vinyl aromatic polymer and the polyphenylene ether, during moulding to form an optical device have different tendencies to molecular orientation and/or different relaxation speeds in a mould.

Thus, polyphenylene ethers, in moulding, exhibit inherently high melt visocity and tend to develop molecular orientation, which is liable to remain after moulding ; but when a polyphenylene ether of lower average molecular weight is used for moulding an optical device, the orientation of the polyphenylene ether molecules in the resin mixture will occur with more difficulty and the relaxation speed will higher ; therefore optical devices exhibiting reduced birefringence to vertically incident as to well as oblique beams can be obtained from a wider range of resin compositions under wider ranges of injection moulding conditions.

The resin material for the optical device may be prepared by mixing the vinyl aromatic polymer and the polyphenylene ether by a melt or solution mixing technique.

Melt mixing may be carried out using a mixing machine such as an extruder. Banbury mixer, kneader blender, or heated roller mill under high shear stress at temperatures of at least the glass transition point of the polyphenylene ether. The degree of mixing should desirably be such that particle sizes about 1μm or less, preferably of molecular order. When molecular-order dispersion is reached can be readily judged by observing that the mixture exhibits a single glass transition temperature.

To achieve satisfactory mixing, the mixing temperature may be raised, the mixing period may be extended and/or the shear stress may be increased.

In melt mixing, a small amount of an organic solvent may used as a plastisizer to reduce the glass transition temperature of both polymers, thereby facilitating mixing. Organic solvents, as noted below, suitable for solution mixing can be used in this case. The solvent may be removed by distillation after completion of the mixing.

Solution mixing may be effected by dissolving each polymer in an organic solvent to a concentration of at least 1% by weight, mixing the solutions with stirring to form a uniform mixture, and either distilling the mixture to remove the solvent or adding a poor solvent for the polymers to the mixture to precipitate the polymers.

Suitable solvents for solution mixing include, for example, chloroform, methylene chloride, ethylene chloride, toluene, benzene, and chlorobenzene. Suitable poor solvents include, for example, methanol, ethanol, propanol, n-hexane, and n-pentane.

A block of graft copolymer comprising vinyl aromatic polymer and polyphenylene ether blocks can be prepared by polymerising the monomer (s) to form one of the polymers ion the presence of the other polymer. For instance, a block or graft copolymer can be produced according to the methods described in Japanese Patent Publications Nos. 22069/67, 1210/72, 47862/72, and 38596/77, by either polymerization of a monomer mixture composed mainly of an aromatic vinyl monomer in the presence of a polyphenylene ether, or by oxidative coupling polymerization of an appropriate phenolic monomer in the presence of the vinyl aromatic polymer.

The resin composition of the optical device, in practice, is suitably chosen within the above defined ranges depending on the method of moulding. In injection moulding, for example, the resin proportions may be suitably chosen depending on preset conditions of moulding, such as resin temperature, injection pressure, and moulding temperature so that the birefringence of the mouldings will agree with the level required for the intended purpose of the product.

Optical devices, particularly optical disk substrates, of the present invention in certain applications transmit semiconductor laser beams or the like. Accordingly, the light transmittance of optical devices for such applications is desirably at least 75% at a wavelength of 800 nm when the thickness of optical device is 1.2 mm.

Of the optical devices of the present invention, optical disk substrates are formed by injection moulding, or injection-compression moulding. The effect of the present invention is the more remarkable when such a moulding method, is used which tends to form higher birefringent products, though injection moulding is best suited in view of productivity.

Basically injection moulding comprises heating a resin to a fluid state, forcing the resin into a dosed mould cavity, and solidifying the resin by cooling. This simple injection moulding method may be combined with a

mould cavity evacuating method or an injection-compression moulding method may be used.

When an optical device of the invention is produced by injection moulding, a melted and plasticized resin is suitably injected at a temperature of from 270 to 350°C, preferably from 300 to 340°C. This temperature is that of the resin, in the injection cylinder, which has been melted and plasticized by heating with external heaters and with shear heat generated by screw revolution in the injection moulding machine. If the resin temperature is below 270°C, the resulting optical disk substrate may be unsuitable for its intended use since the degree of birefringence may become 20 nm or more. If the resin temperature exceeds 350°C, the resin decomposes, develops defects such as bumings and silver flow marks and bit errors on the resulting optical disk substrate will markedly increase.

In injection moulding, the mould temperature is suitably maintained at a temperature of from 50 to 140°C, preferably from 80 to 120°C. (The mould temperature is the surface temperature of the mould cavity immediately before injection). If the mould temperature is below 50°C, the reprduction of finely engraved grooves on the mould cavity surface deteriorates and if the mould temperature exceeds 140°C, releasability of the moulded resin from the mould becomes worse. The injection period is suitably from 0.2 to 3.0 seconds, preferably from 0.3 to 2 seconds. (The injection period is the period of time taken to filling the resin into the mould cavity). Injection periods below 0.2 second may give rise to silver flow marks and may result in increased bit errors when the mouldings are used as an optical disk. Injection periods of longer than 3 seconds undesirably may cause the resulting optical disk substrate to exhibit high birefringence, corresponding to 20 nm or more.

In order that the invention may be well understood the following Examples are given by way of illustration only. In the examples, all parts and percentages are by weight unless otherwise stated.

The physical properties noted in the examples were measured as follows :

| | |
|---|---|
| Birefringence : | Measured using a polarization microscope, the retardation was measured at a wave-length of 546 nm according to the Semarmont compensator method. |
| Water absroption : | Equilibrium water absorption in water at 60°C was measured in accordance with ASTM D-570. |
| Light transmittance : | The transmittance of a 1.2-mm thick specimen was measured at a wavelength of 800 nm using a self recording spectrophotometer Model 330 supplied by Hitachi, Ltd. |
| Flexural properties : | Measured in accordance with ASTM D-790. |
| Heat resistance : | Expressed in terms of the glass transition temperature measured by the linear expansion coefficient method. |
| Intrinsic viscosity of polymer : | Measured in chloroform at 25°C using Ubblohde viscometers. |

The kneading and pelletizing was carried out by using a twin-screw extruder (Model TEX30-30BW-2V, supplied by the Japan Steel Works, Ltd.).

The injection molding was carried out by using an injection molding machine (Neomat Model 150/75 (75 ton), supplied by Sumitomo Heavy Industries, Ltd.) and a mold for producing a disk 120 mm across and 1.2 mm thick.

Examples I-II

Poly (2,6-dimethyl-1,4-phenylene) ethers of different intrinsic viscosity as shown in Table 1 were severally blended with a polystyrene resin (tradename : Esbrite 4-62A, supplied by Nihon Polystyrene Kogyo Co., Ltd.) in various proportions shown also in Table 1. These blends were each kneaded, pelletized, and injection-molded under the conditions of 320°C resin temperature, 100°C mold temperature, and 1 second's injection period to prepare optical disk substrates.

Table 1 shows values of birefringence of a vertical incident beam and an oblique incident beam of 30°

caused by the thus obtained optical disk substrates. The measurement position is expressed by the distance in the radial direction from the center of the optical disk substrate.

Table 1 also shows flexural properties and heat resistance of plates prepared by press-forming of pelletized resins above at 270°C.

Table 1

| Example No. | Composition | | | Birefringence (nm) | | | | | | Flexural property | | | Heat resistance |
|---|---|---|---|---|---|---|---|---|---|---|---|---|---|
| | Poly(2,6-dimethyl-1,4-phenylene)ether | | Polystyrene | Vertical incident beam | | | 30° oblique incident beam | | | Flexural strength | Flexural modulus | Maximum strain | |
| | Intrinsic viscosity | Parts | Parts | At 25 mm | At 40 mm | At 55 mm | At 25 mm | At 40 mm | At 55 mm | Kg/cm$^2$ | Kg/cm$^2$ | % | °C |
| 1 | 0.44 | 44 | 56 | +2 | +1 | +2 | +3 | +1 | +2 | 1180 | 35,200 | 4.2 | 148 |
| 2 | 0.44 | 48 | 52 | +19 | +16 | +15 | +20 | +18 | +17 | 1160 | 35,500 | 4.5 | 153 |
| 3 | 0.40 | 46 | 54 | -13 | -10 | -12 | -9 | -10 | -10 | 1010 | 35,300 | 3.2 | 149 |
| 4 | 0.40 | 50 | 50 | -1 | -2 | -2 | 0 | -1 | -1 | 1080 | 35,800 | 3.5 | 154 |
| 5 | 0.40 | 54 | 46 | +10 | +11 | +12 | +12 | +12 | +12 | 1100 | 35,800 | 3.7 | 159 |
| 6 | 0.35 | 55 | 45 | -7 | -8 | -8 | -8 | -8 | -9 | 700 | 34,200 | 3.0 | 150 |
| 7 | 0.35 | 59 | 41 | 0 | -1 | -1 | 0 | 0 | -1 | 720 | 34,500 | 3.1 | 155 |
| 8 | 0.35 | 63 | 37 | +6 | +6 | +6 | +8 | +7 | +7 | 750 | 34,600 | 3.3 | 159 |
| 9 | 0.31 | 63 | 37 | -4 | -4 | -4 | -5 | -5 | -5 | 430 | 35,000 | 1.6 | 149 |
| 10 | 0.31 | 67 | 33 | +1 | +1 | +1 | +1 | 0 | 0 | 410 | 34,900 | 1.4 | 154 |
| 11 | 0.31 | 70 | 30 | +6 | +5 | +5 | +6 | +6 | +6 | 420 | 34,800 | 1.5 | 158 |

According to the invention, it is possible to provide an optical device which comprises a resin of the polystyrene family as an ingredient, which resin being of reduced hygroscopicity and good in dimensional stability but inpracticable up to now because of its high birefringent properties. In addition such a resin has a good balance of heat resistance and mechanical strength.

The optical device also comprises a specific polyphenylene ether having relatively low instrinsic viscosity as another ingredient, thereby having low birefringence for vertically incident beams as well as unprecedently for obliquely incident beams, and additionally has wide composition latitude, hence offering high heat resistance.

The optical device of the present invention also has the advantage making it possible to mould low birefringent mouldings even by injection moulding which is generally regarded as producing large birefringence.

Optical devices of the invention include optical disk substrates, lenses, prisms, etc. and as particularly suited for applications where light of a specific wavelength is used. The optical device is suited for use as a common optical disk substrate, of course, and also as a magnetooptical disk substrate because it has low birefringence for obliquely incident beams, as stated above, and has high heat reistance.

## Claims

1. An optical device formed by injection moulding a compression-injection moulding of a polymeric material comprising (i) from 56 to 30% by weight of polymer portions constituted mainly of aromatic vinyl monomer units and (ii) from 44 to 70% by weight of polyphenylene ether portions, the average molecular weight of the polyphenylene ether portions being from 0.3 to 0.45, expressed in terms of the intrinsic viscosity as measured in chloroform at 25°C.

2. An optical device as claimed in claim 1 characterised in that the aromatic vinyl monomer is styrene and the polyphenylene ether is poly (2,6-dimethyl-1,4-phenylene) ether.

3. An optical device as claimed in claim 1 or claim 2 characterised in that it is in the form of a magnetooptical disk substrate.

## Patentansprüche

1. Optische Vorrichtung, gebildet durch Spritzgießen oder Prägespritzgießen eines polymeren Materials aus
   1. 56 - 30 Gew.-% an hauptsächlich aus aromatischen Vinylmonomereneinheiten bestehenden Polymerenanteilen und
   2. 44 - 70 Gew.-% Polyphenylenetheranteilen, wobei das durchschnittliche Molekulargewicht der Polyphenylenetheranteile 0,3 - 0,45, ausgedrückt als in Chloroform bei 25°C gemessene Intrinsicviskosität, beträgt.

2. Optische Vorrichtung nach Anspruch 1, dadurch gekennzeichnet, daß das aromatische Vinylmonomere aus Styrol und der Polyphenylenether aus Poly-(2,6-dimethyl-1,4-phenylen)-ether bestehen.

3. Optische Vorrichtung nach Anspruch 1 oder 2, dadurch gekennzeichnet, daß sie in Form eines magnetooptischen Plattensubstrats vorliegt.

## Revendications

1. Dispositif optique formé par moulage par injection ou par moulage par compression-injection d'un matériau polymère comprenant (i) de 56 à 30% en poids de portions polymères constituées principalement de motifs monomères vinylaromatiques et (ii) de 44 à 70% en poids de portions poly(oxyde de phénylène), le poids moléculaire moyen des portions poly(oxyde de phénylène) étant de 0,3 à 0,45 exprimé en viscosité intrinsèque mesurée dans le chloroforme à 25°C.

2. Dispositif optique selon la revendication 1, caractérisé en ce que le monomère vinylaromatique est le styrène et le pely(oxyde de phénylène) est le poly(oxyde de 2,6-diméthyl-1,4-phénylène).

3. Dispositif optique selon la revendication 1 ou la revendication 2, caractérisé en ce qu'il est sous forme d'un substrat de disque magnéto-optique.